# EUROPEAN PATENT APPLICATION

(11) **EP 4 693 499 A1**
(43) Date of publication of application: **11.02.2026**
(21) Application number: 24784098.6
(22) Date of filing: 25.03.2024
(51) Int. Cl.: H01M 4/583, H01M 4/133, H01M 10/0525, H01M 10/054

(54) **NEGATIVE ELECTRODE ACTIVE MATERIAL AND PREPARATION METHOD THEREFOR, AND SECONDARY BATTERY AND ELECTRONIC DEVICE**

(30) Priority: 07.04.2023 CN 202310369251
(71) Applicant: Ningde Amperex Technology Limited, Ningde, Fujian 352100 (CN)
(72) Inventor: SHAO, Wenlong, Ningde, Fujian 352100 (CN); YI, Zheng, Ningde, Fujian 352100 (CN); ZHENG, Zigui, Ningde, Fujian 352100 (CN); XIE, Yuansen, Ningde, Fujian 352100 (CN)
(74) Representative: Kraus & Lederer PartGmbB
(86) International application number: PCT/CN2024/083630
(87) International publication number: WO 2024/208013

(57) **Abstract**

This application provides a negative electrode active material and a preparation method thereof, a secondary battery, and an electronic device, where the negative electrode active material includes a hard carbon material; the hard carbon material contains micropores and ultramicropores, a pore diameter of the micropores is less than 2 nm, a pore diameter of the ultramicropores is less than 0.7 nm, a pore volume of the micropores accounts for 95% to 100% of a total pore volume, a pore volume of the ultramicropores ranges from 0.01 cm³/g to 0.2 cm³/g, and the pore volume of the ultramicropores accounts for 80% to 99% of the total pore volume. The negative electrode active material provided in this application exhibits a stable low-potential plateau, high specific capacity, and high reversible capacity, and applying the negative electrode active material of this application to secondary batteries enhances the energy density of secondary batteries while improving their cycle performance.

## Description

This application claims priority to Chinese Patent Application No. 202310369251.6, filed with the China National Intellectual Property Administration on April 7, 2023 and entitled "NEGATIVE ELECTRODE ACTIVE MATERIAL AND PREPARATION METHOD THEREOF, NEGATIVE ELECTRODE PLATE, AND SECONDARY BATTERY," which is incorporated herein by reference in its entirety.

### TECHNICAL FIELD

This application relates to the field of electrochemical technology, particularly to a negative electrode active material and a preparation method thereof, a secondary battery, and an electronic device.

### BACKGROUND

Secondary batteries possess prominent advantages such as high energy density, low self-discharge rate, long cycle life, and stable discharge performance, and are widely applied in industrial production and daily life.

Currently, the capacity development of graphite negative electrode active materials has reached its limit, approaching the theoretical capacity of 372 mAh/g, resulting in difficulty in further improving the energy density of lithium-ion batteries using graphite as the negative electrode active material. Additionally, commercial graphite cannot be directly applied to sodium-ion batteries. Among numerous negative electrode active materials under development, hard carbon materials have garnered significant attention due to their high theoretical specific capacity, low volume expansion, and fast charge-discharge characteristics. Hard carbon materials can serve as negative electrode active materials for both lithium-ion batteries and sodium-ion batteries, exhibiting broad application prospects. However, existing hard carbon materials exhibit low actual specific capacity, high irreversible capacity, and lack a stable charge-discharge plateau, limiting their contribution to the energy density enhancement of secondary batteries and making it challenging to meet practical application demands.

### SUMMARY

The purpose of this application is to provide a negative electrode active material and a preparation method thereof, a secondary battery, and an electronic device to enhance the energy density of secondary batteries. The specific technical solutions are as follows:

A first aspect of this application provides a negative electrode active material including a hard carbon material; where the hard carbon material contains micropores and ultramicropores, a pore diameter of the micropores is less than 2 nm, a pore diameter of the ultramicropores is less than 0.7 nm; a pore volume of the micropores accounts for 95% to 100% of a total pore volume, a pore volume of the ultramicropores ranges from 0.01 cm³/g to 0.2 cm³/g, and the pore volume of the ultramicropores accounts for 80% to 99% of the total pore volume. By controlling the proportion of the pore volume of the micropores to the total pore volume, the proportion of the pore volume of the ultramicropores to the total pore volume, and the pore volume of the ultramicropores within the above ranges, the negative electrode active material achieves a stable low-potential plateau, high specific capacity, and high reversible capacity. Applying the negative electrode active material of this application to secondary batteries enhances the energy density of secondary batteries while improving their cycle performance.

In some embodiments of this application, the hard carbon material contains a carbon element and an oxygen element, and a mass percentage of the oxygen element in the hard carbon material ranges from 2% to 7%. A hard carbon material containing the carbon element and the oxygen element with the mass percentage of the oxygen element within the above range facilitates the adsorption of active metal ions in the micropores and the intercalation-deintercalation within the ultramicropores, thereby contributing to an increase in the specific capacity of the negative electrode active material.

In some embodiments of this application, a form of the oxygen element in the hard carbon material includes a carbonyl group and a carboxyl group, and a mass of the oxygen element in the carbonyl group and the carboxyl group accounts for 60% to 99% of a total mass of the oxygen element in the hard carbon material. The presence of the oxygen element in the hard carbon material in the above forms, with its percentage controlled within the above range, further facilitates redox reactions of active metal ions, thereby further increasing the specific capacity of the negative electrode active material.

In some embodiments of this application, the hard carbon material further contains element A, where the element A includes at least one of N or S; and based on a mass of the hard carbon material, a mass percentage of the element A ranges from 0.05% to 2%. A hard carbon material containing the element A within the above range, with its percentage controlled within the above range, helps expand the interlayer spacing of the carbon layers in the hard carbon material, promotes the intercalation-deintercalation of active metal ions within the hard carbon material, and enables the negative electrode active material to exhibit a low-potential plateau and high reversible capacity.

In some embodiments of this application, the hard carbon material satisfies 0.8 ≤ I_{D}/I_{G} ≤ 1.5, where I_{D} represents a peak area of a D peak in a Raman spectrum of the hard carbon material, and I_{G} represents a peak area of a G peak in the Raman spectrum of the hard carbon material. This indicates that the hard carbon material has an appropriate degree of defects, which promotes ion adsorption and binding while reducing irreversible capacity loss caused by a high degree of defects, thereby contributing to an increase in the specific capacity of the negative electrode active material.

In some embodiments of this application, within a potential range of 0 V to 2.5 V relative to Li/Li⁺, a total lithium storage specific capacity of the hard carbon material ranges from 300 mAh/g to 700 mAh/g; a delithiation energy of the hard carbon material is E₁ Wh, a delithiation capacity of the hard carbon material is C₁ Ah, an average delithiation potential of the hard carbon material is E₁/C₁ V, and 0.13 ≤ E₁/C₁ ≤ 0.28; and within a potential range of 0 V to 0.1 V relative to Li/Li⁺, a specific capacity of the hard carbon material accounts for 30% to 65% of the total lithium storage specific capacity; and within a potential range of 0 V to 0.8 V relative to Li/Li⁺, the specific capacity of the hard carbon material accounts for 70% to 96% of the total lithium storage specific capacity. This indicates that the hard carbon material has a high total lithium storage specific capacity and a low average delithiation potential. Using the hard carbon material with the above characteristics as the negative electrode active material for lithium-ion batteries contributes to an increase in the energy density of lithium-ion batteries.

In some embodiments of this application, within a potential range of 0 V to 2.5 V relative to Na/Na⁺, a total sodium storage specific capacity of the hard carbon material ranges from 250 mAh/g to 400 mAh/g; a desodiation energy of the hard carbon material is E₂ Wh, a desodiation capacity of the hard carbon material is C₂ Ah, an average desodiation potential of the hard carbon material is E₂/C₂ V, and 0.2 ≤ E₂/C₂ ≤ 0.4; and within a potential range of 0 V to 0.5 V relative to Na/Na⁺, a specific capacity of the hard carbon material accounts for 76% to 91% of the total sodium storage specific capacity; and within a potential range of 0 V to 0.8 V relative to Na/Na⁺, the specific capacity of the hard carbon material accounts for 89% to 95% of the total sodium storage specific capacity. This indicates that the hard carbon material has a high total sodium storage specific capacity and a low average desodiation potential. Using the hard carbon material with the above characteristics as the negative electrode active material for sodium-ion batteries contributes to an increase in the energy density of sodium-ion batteries.

In some embodiments of this application, an electrical conductivity of the hard carbon material ranges from 0.5 S/cm to 10 S/cm. Controlling the electrical conductivity of the hard carbon material within the above range contributes to improving the capacity and rate performance of secondary batteries and enhancing their cycle performance.

A second aspect of this application provides a preparation method of the negative electrode active material according to the first aspect of this application, where the preparation method of the hard carbon material includes:
(1) crushing and sieving a precursor, placing the precursor in a sealed reactor, and replacing a gas in the sealed reactor with a first gas; where the precursor includes at least one of lignin, cellulose, alkali lignin, asphalt, epoxy resin, or phenolic resin, and the first gas includes any one of oxygen, air, or carbon dioxide;
(2) sealing the sealed reactor and performing primary calcination on the sealed reactor in a nitrogen atmosphere, heating at a rate of 0.5°C/min to 5°C/min to a temperature of 700°C to 900°C for pre-carbonization for 1 h to 4 h, and cooling to obtain a pre-carbonized material;
(3) performing secondary calcination on the pre-carbonized material in a nitrogen atmosphere, heating at a rate of 0.5°C/min to 5°C/min to a temperature of 1000°C to 1500°C for carbonization for 1 h to 8 h, cooling to obtain a carbonized material, and classifying the carbonized material according to particle size; and
(4) heating the classified material from step (3) to a temperature of 700°C to 1200°C, introducing a mixed gas of a reducing gas and argon, maintaining for 0.1 h to 12 h, then replacing the mixed gas with nitrogen, and cooling to obtain the hard carbon material; where the reducing gas includes at least one of acetylene or methane, and based on a mass of the mixed gas, a mass percentage of the reducing gas ranges from 5 wt% to 20 wt%.

The negative electrode active material prepared by the method provided in the second aspect of this application exhibits a stable low-potential plateau, high specific capacity, and high reversible capacity. Using the negative electrode active material in the negative electrode plate of secondary batteries enhances the energy density of secondary batteries while improving their cycle performance.

A third aspect of this application provides a secondary battery, where the secondary battery includes a positive electrode plate, a negative electrode plate, and an electrolyte, where the negative electrode plate includes a negative electrode current collector and a negative electrode active material layer disposed on at least one surface of the negative electrode current collector, and the negative electrode active material layer includes the negative electrode active material provided in the first aspect of this application or the negative electrode active material prepared by the preparation method provided in the second aspect of this application. The negative electrode plate of this application has high capacity, capable of enhancing the energy density of secondary batteries while improving their cycle performance, thereby providing a secondary battery with high energy density and good cycle performance.

In some embodiments of this application, a compacted density of the negative electrode active material layer ranges from 0.8 g/cm³ to 1.2 g/cm³. Controlling the compacted density of the negative electrode active material layer within the above range increases the content of the negative electrode active material per unit area, thereby enhancing the energy density of secondary batteries.

A fourth aspect of this application provides an electronic device including the secondary battery provided in the third aspect of this application. The secondary battery provided in the third aspect of this application has high energy density and good cycle performance, thereby providing an electronic device with a longer service life in the fourth aspect of this application.

### Beneficial effects of this application:

This application provides a negative electrode active material and a preparation method thereof, a secondary battery, and an electronic device. The negative electrode active material includes a hard carbon material; the hard carbon material contains micropores and ultramicropores, a pore diameter of the micropores is less than 2 nm, a pore diameter of the ultramicropores is less than 0.7 nm, a pore volume of the micropores accounts for 95% to 100% of a total pore volume, a pore volume of the ultramicropores ranges from 0.01 cm³/g to 0.2 cm³/g, and a pore volume of the ultramicropores accounts for 80% to 99% of the total pore volume. By controlling a proportion of the pore volume of the micropores to the total pore volume, a proportion of the pore volume of the ultramicropores to the total pore volume, and the pore volume of the ultramicropores within the above ranges, the negative electrode active material achieves a stable low-potential plateau, high specific capacity, and high reversible capacity. Applying the negative electrode active material of this application to secondary batteries enhances the energy density of secondary batteries while improving their cycle performance.

Of course, any product or method implementing this application does not necessarily need to achieve all the advantages described above simultaneously.

### BRIEF DESCRIPTION OF DRAWINGS

To more clearly illustrate the technical solutions in the embodiments of this application or in the prior art, the drawings required for describing the embodiments or the prior art are briefly introduced below. Apparently, the drawings described below are merely some embodiments of this application, and for those of ordinary skill in the art, other embodiments can be obtained based on these drawings.
FIG. 1 shows a scanning electron microscope photograph of the hard carbon material prepared in Example 1-5;
FIG. 2 shows a pore diameter distribution diagram of the hard carbon material prepared in Example 1-5 based on nitrogen adsorption-desorption;
FIG. 3 shows charge-discharge curves of the hard carbon material of Example 1-5 within a potential range of 0 V to 2.5 V relative to Li/Li⁺;
FIG. 4 shows charge-discharge curves of the hard carbon material of Comparative Example 2 within a potential range of 0 V to 2.5 V relative to Li/Li⁺;
FIG. 5 shows charge-discharge curves of the hard carbon material of Example 2-1 within a potential range of 0 V to 2.5 V relative to Na/Na⁺;
FIG. 6 shows a Raman spectrum of the hard carbon material prepared in Example 1-5; and
FIG. 7 shows an X-ray diffraction spectrum of the hard carbon material prepared in Example 1-5.

### DETAILED DESCRIPTION

The following clearly and completely describes the technical solution in the embodiments of this application with reference to the accompanying drawings in the embodiments of this application. Apparently, the described embodiments are only some rather than all of the embodiments of this application. Based on the embodiments in this application, all other embodiments obtained by those of ordinary skill in the art based on this application fall within the protection scope of this application.

It should be noted that in the specific embodiments of this application, lithium-ion batteries and sodium-ion batteries are used as examples of secondary batteries to explain this application, but the secondary batteries of this application are not limited to lithium-ion batteries and sodium-ion batteries.

A first aspect of this application provides a negative electrode active material including a hard carbon material; where the hard carbon material contains micropores and ultramicropores, a pore diameter of the micropores is less than 2 nm, a pore diameter of the ultramicropores is less than 0.7 nm; a pore volume of the micropores accounts for 95% to 100% of a total pore volume, a pore volume of the ultramicropores ranges from 0.01 cm³/g to 0.2 cm³/g, and the pore volume of the ultramicropores accounts for 80% to 99% of the total pore volume. For example, a proportion of the pore volume of the micropores to the total pore volume may be 95%, 96%, 97%, 98%, 100%, or any range composed of any two of these values; a pore volume of the ultramicropores may be 0.01 cm³/g, 0.04 cm³/g, 0.08 cm³/g, 0.12 cm³/g, 0.15 cm³/g, 0.17 cm³/g, 0.2 cm³/g, or any range composed of any two of these values; and a proportion of the pore volume of the ultramicropores to the total pore volume may be 80%, 83%, 85%, 87%, 89%, 91%, 93%, 95%, 97%, 99%, or any range composed of any two of these values. In this application, the total pore volume refers to the sum of the pore volumes of all pores in the hard carbon material, the pore volume of the micropores refers to the sum of the pore volumes of all micropores in the hard carbon material, and the pore volume of the ultramicropores refers to the sum of the pore volumes of all ultramicropores in the hard carbon material.

The negative electrode active material provided in this application includes a hard carbon material, where the hard carbon material internally contains abundant micropores and ultramicropores. Active metal ions (such as lithium ions and sodium ions) can be stored in the micropores or ultramicropores, so the abundant micropores and ultramicropores inside the hard carbon material enhance its specific capacity and enable the hard carbon material to exhibit a stable low-potential plateau. Additionally, the high proportion of the pore volume of the micropores to the total pore volume and the high proportion of the pore volume of the ultramicropores to the total pore volume in the hard carbon material result in very few mesopores (pore diameter from 2 nm to 50 nm) and macropores (pore diameter greater than 50 nm) caused by over-activation of the hard carbon material, thus not affecting the first coulombic efficiency and irreversible capacity of the hard carbon material. By controlling the proportion of the pore volume of the micropores to the total pore volume, the proportion of the pore volume of the ultramicropores to the total pore volume, and the pore volume of the ultramicropores within the above ranges, the negative electrode active material achieves a stable low-potential plateau, high specific capacity, and high reversible capacity. Applying the negative electrode active material of this application to secondary batteries enhances the energy density of secondary batteries while improving their cycle performance.

In some embodiments of this application, the hard carbon material contains a carbon element and an oxygen element, and a mass percentage of the oxygen element in the hard carbon material ranges from 2% to 7%, for example, the mass percentage of the oxygen element in the hard carbon material may be 2%, 3%, 4%, 5%, 6%, 7%, or any range composed of any two of these values. A hard carbon material containing the carbon element and the oxygen element with the mass percentage of the oxygen element within the above range facilitates the intercalation-deintercalation of active metal ions in the micropores and ultramicropores, thereby contributing to an increase in the specific capacity of the negative electrode active material.

In some embodiments of this application, a form of the oxygen element in the hard carbon material includes a carbonyl group and a carboxyl group, and a mass of the oxygen element in the carbonyl group and the carboxyl group accounts for 60% to 99% of a total mass of the oxygen element in the hard carbon material, for example, a percentage of the mass of the oxygen element in the carbonyl group and the carboxyl group to the total mass of the oxygen element in the hard carbon material may be 60%, 70%, 75%, 80%, 90%, 99%, or any range composed of any two of these values. The form of the oxygen element in the hard carbon material also includes an ether group in addition to the carbonyl group and the carboxyl groups. Compared to the ether group, the carbonyl group and the carboxyl group exhibit stronger electronegativity, making them more conducive to binding ions (such as lithium ions and sodium ions). The presence of the oxygen element in the hard carbon material in the above forms, with the mass of the oxygen element in the carbonyl group and the carboxyl group controlled within the above range relative to the total mass of the oxygen element in the hard carbon material, further facilitates redox reactions of active metal ions, thereby further increasing the specific capacity of the negative electrode active material.

In some embodiments of this application, the hard carbon material further contains element A, where the element A includes at least one of N or S; and based on a mass of the hard carbon material, a mass percentage of the element A ranges from 0.05% to 2%, for example, the mass percentage of the element A may be 0.05%, 0.1%, 0.2%, 0.5%, 0.7%, 1%, 1.3%, 1.5%, 1.7%, 2%, or any range composed of any two of these values. A hard carbon material containing element A within the above range, with its content controlled within the above range, helps expand the interlayer spacing of the hard carbon material, promotes the intercalation-deintercalation of active ions within the hard carbon material, and enables the negative electrode active material to exhibit a low-potential plateau and high reversible capacity.

In some embodiments of this application, the hard carbon material satisfies 0.8 ≤ I_{D}/I_{G} ≤ 1.5, where I_{D} represents a peak area of a D peak in a Raman spectrum of the hard carbon material, and I_{G} represents a peak area of a G peak in the Raman spectrum of the hard carbon material. For example, a value of I_{D}/I_{G} may be 0.8, 0.9, 1, 1.1, 1.2, 1.3, 1.4, 1.5, or any range composed of any two of these values. This indicates that the hard carbon material has an appropriate degree of defects, which promotes ion adsorption and binding while reducing irreversible capacity loss caused by a high degree of defects, thereby contributing to an increase in the specific capacity of the negative electrode active material.

In some embodiments of this application, within a potential range of 0 V to 2.5 V relative to Li/Li⁺, a total lithium storage specific capacity of the hard carbon material ranges from 300 mAh/g to 700 mAh/g; a delithiation energy of the hard carbon material is E₁ Wh, a delithiation capacity of the hard carbon material is C₁ Ah, an average delithiation potential of the hard carbon material is E₁/C₁ V, and 0.13 ≤ E₁/C₁ ≤ 0.28. For example, within the potential range of 0 V to 2.5 V relative to Li/Li⁺, the total lithium storage specific capacity of the hard carbon material may be 300 mAh/g, 400 mAh/g, 500 mAh/g, 600 mAh/g, 700 mAh/g, or any range composed of any two of these values, and a value of E₁/C₁ may be 0.13, 0.15, 0.18, 0.2, 0.23, 0.25, 0.28, or any range composed of any two of these values. This indicates that the hard carbon material has a high total lithium storage specific capacity and a low average delithiation potential. Using the hard carbon material with the above characteristics as the negative electrode active material for lithium-ion batteries contributes to an increase in the energy density of lithium-ion batteries. In this application, the total lithium storage specific capacity refers to the total lithium storage specific capacity of the hard carbon material within the potential range of 0 V to 2.5 V relative to Li/Li⁺.

In some embodiments of this application, within a potential range of 0 V to 0.1 V relative to Li/Li⁺, a specific capacity of the hard carbon material accounts for 30% to 65% of the total lithium storage specific capacity, for example, within the potential range of 0 V to 0.1 V relative to Li/Li⁺, a proportion of the specific capacity of the hard carbon material to a total lithium storage specific capacity may be 30%, 35%, 40%, 45%, 50%, 55%, 60%, 65%, or any range composed of any two of these values. This indicates that the hard carbon material has a low average delithiation potential. Using the hard carbon material with the above characteristics as the negative electrode active material for lithium-ion batteries contributes to an increase in the energy density of lithium-ion batteries.

In some embodiments of this application, within a potential range of 0 V to 0.8 V relative to Li/Li⁺, the specific capacity of the hard carbon material accounts for 70% to 96% of the total lithium storage specific capacity, for example, within the potential range of 0 V to 0.8 V relative to Li/Li⁺, the proportion of the specific capacity of the hard carbon material to the total lithium storage specific capacity may be 70%, 75%, 80%, 85%, 90%, 95%, 96%, or any range composed of any two of these values. This indicates that the hard carbon material has a low average delithiation potential. Using the hard carbon material with the above characteristics as the negative electrode active material for lithium-ion batteries contributes to an increase in the energy density of lithium-ion batteries.

In some embodiments of this application, within a potential range of 0 V to 2.5 V relative to Na/Na⁺, a total sodium storage specific capacity of the hard carbon material ranges from 250 mAh/g to 400 mAh/g; a desodiation energy of the hard carbon material is E₂ Wh, a desodiation capacity of the hard carbon material is C₂ Ah, an average desodiation potential of the hard carbon material is E₂/C₂ V, and 0.2 ≤ E₂/C₂ ≤ 0.4. For example, within the potential range of 0 V to 2.5 V relative to Na/Na⁺, the total sodium storage specific capacity of the hard carbon material may be 250 mAh/g, 300 mAh/g, 325 mAh/g, 350 mAh/g, 400 mAh/g, or any range composed of any two of these values, and a value of E₂/C₂ may be 0.2, 0.25, 0.3, 0.35, 0.4, or any range composed of any two of these values. This indicates that the hard carbon material has a high total sodium storage specific capacity and a low average desodiation potential. Using the hard carbon material with the above characteristics as the negative electrode active material for sodium-ion batteries contributes to an increase in the energy density of sodium-ion batteries. In this application, the total sodium storage specific capacity refers to the total sodium storage specific capacity of the hard carbon material within the potential range of 0 V to 2.5 V relative to Na/Na⁺.

In some embodiments of this application, within a potential range of 0 V to 0.5 V relative to Na/Na⁺, a specific capacity of the hard carbon material accounts for 76% to 91% of the total sodium storage specific capacity. For example, within the potential range of 0 V to 0.5 V relative to Na/Na⁺, a proportion of the specific capacity of the hard carbon material to the total sodium storage specific capacity may be 76%, 80%, 83%, 85%, 88%, 91%, or any range composed of any two of these values. This indicates that the hard carbon material has a low average desodiation potential. Using the hard carbon material with the above characteristics as the negative electrode active material for sodium-ion batteries contributes to an increase in the energy density of sodium-ion batteries.

In some embodiments of this application, within a potential range of 0 V to 0.8 V relative to Na/Na⁺, the specific capacity of the hard carbon material accounts for 89% to 95% of the total sodium storage specific capacity. For example, within the potential range of 0 V to 0.8 V relative to Na/Na⁺, the proportion of the specific capacity of the hard carbon material to the total sodium storage specific capacity may be 89%, 90%, 91%, 92%, 93%, 94%, 95%, or any range composed of any two of these values. This indicates that the hard carbon material has a low average desodiation potential. Using the hard carbon material with the above characteristics as the negative electrode active material for sodium-ion batteries contributes to an increase in the energy density of sodium-ion batteries.

In some embodiments of this application, an electrical conductivity of the hard carbon material ranges from 0.5 S/cm to 10 S/cm. For example, the electrical conductivity of the hard carbon material may be 0.5 S/cm, 1 S/cm, 3 S/cm, 5 S/cm, 7 S/cm, 9 S/cm, 10 S/cm, or any range composed of any two of these values. Controlling the electrical conductivity of the hard carbon material within the above range reduces the internal resistance of secondary batteries, contributing to improvements in the capacity and rate performance of secondary batteries and enhancing their cycle performance.

A second aspect of this application provides a preparation method of the negative electrode active material according to the first aspect of this application, where the preparation method of the hard carbon material includes the following steps:
(1) crushing and sieve a precursor, place the precursor in a sealed reactor, and replace a gas in the sealed reactor with a first gas; where the precursor includes at least one of lignin, cellulose, alkali lignin, asphalt, epoxy resin, or phenolic resin, and the first gas includes any one of oxygen, air, or carbon dioxide;
(2) seal the sealed reactor and perform primary calcination on the sealed reactor in a nitrogen atmosphere, heat at a rate of 0.5°C/min to 5°C/min to a temperature of 700°C to 900°C for pre-carbonization for 1 h to 4 h, and cool to obtain a pre-carbonized material;
(3) perform secondary calcination on the pre-carbonized material in a nitrogen atmosphere, heat at a rate of 0.5°C/min to 5°C/min to a temperature of 1000°C to 1500°C for carbonization for 1 h to 8 h, cool to obtain a carbonized material, and classify the carbonized material according to particle size; and
(4) heat the classified material from step (3) to a temperature of 700°C to 1200°C, introduce a mixed gas of a reducing gas and argon, maintaining for 0.1 h to 12 h, then replace the mixed gas with nitrogen, and cool to obtain the hard carbon material; where the reducing gas includes at least one of acetylene or methane, and based on a mass of the mixed gas, a mass percentage of the reducing gas ranges from 5 wt% to 20 wt%.

The negative electrode active material prepared by the method provided in the second aspect of this application exhibits a stable low-potential plateau, high specific capacity, and high reversible capacity. Using the negative electrode active material in the negative electrode plate of secondary batteries enhances the energy density of secondary batteries while improving their cycle performance.

This application does not specifically limit the classification method in the above step (3), as long as the purpose of this application can be achieved. For example, the calcined negative electrode active material precursor is crushed and classified using a classifying crusher. This application does not specifically limit the sealed reactor, and those skilled in the art can select according to actual needs, as long as the purpose of this application can be achieved. For example, the sealed reactor may include, but is not limited to, a sealed graphite reactor, a sealed corundum reactor, a sealed nickel crucible, a sealed iron crucible, and the like. In this application, the particle size Dv99 of the material classified in the above step (3) can range from 30 µm to 50 µm. In this application, the particle size Dv50 of the hard carbon material ranges from 3 µm to 20 µm. The range of the particle size Dv99 of the hard carbon material may be from 30 µm to 50 µm. Dv50 refers to the particle size at which the cumulative volume reaches 50% in the volume-based particle size distribution of the material, measured from the smallest particle size. Dv99 refers to the particle size at which the cumulative volume reaches 99% in the volume-based particle size distribution of the material, measured from the smallest particle size.

Typically, the mass of the precursor, the primary calcination time, the primary calcination temperature, the vapor deposition time, and the secondary calcination time all affect the proportion of the pore volume of the micropores to the total pore volume and the proportion of the pore volume of the ultramicropores to the total pore volume in the hard carbon material. As the mass of the precursor increases, the proportion of the pore volume of the micropores to the total pore volume and the proportion of the pore volume of the ultramicropores to the total pore volume first increase and then decrease. As the primary calcination time extends, the proportion of the pore volume of the micropores to the total pore volume and the proportion of the pore volume of the ultramicropores to the total pore volume decrease; as the primary calcination time shortens, the proportion of the pore volume of the micropores to the total pore volume and the proportion of the pore volume of the ultramicropores to the total pore volume increase. As the primary calcination temperature rises, the proportion of the pore volume of the micropores to the total pore volume and the proportion of the pore volume of the ultramicropores to the total pore volume increase; as the primary calcination temperature decreases, the proportion of the pore volume of the micropores to the total pore volume and the proportion of the pore volume of the ultramicropores to the total pore volume decrease. As the vapor deposition time extends, the proportion of the pore volume of the micropores to the total pore volume and the proportion of the pore volume of the ultramicropores to the total pore volume increase; as the vapor deposition time shortens, the proportion of the pore volume of the micropores to the total pore volume and the proportion of the pore volume of the ultramicropores to the total pore volume decrease. As the secondary calcination temperature rises, the proportion of the pore volume of the micropores to the total pore volume and the proportion of the pore volume of the ultramicropores to the total pore volume decrease; as the secondary calcination temperature decreases, the proportion of the pore volume of the micropores to the total pore volume and the proportion of the pore volume of the ultramicropores to the total pore volume increase. In this application, carbonized materials of different particle sizes can be selected by classifying the carbonized material according to particle size.

A third aspect of this application provides a secondary battery including a positive electrode plate, a negative electrode plate, and an electrolyte, where the negative electrode plate includes a negative electrode current collector and a negative electrode active material layer disposed on at least one surface of the negative electrode current collector, and the negative electrode active material layer includes the negative electrode active material provided in the first aspect of this application or the negative electrode active material prepared by the preparation method provided in the second aspect of this application. The negative electrode plate of this application has high capacity, capable of enhancing the energy density of secondary batteries while improving their cycle performance, thereby providing a secondary battery with high energy density and good cycle performance.

In some embodiments of this application, a compacted density of the negative electrode active material layer ranges from 0.8 g/cm³ to 1.2 g/cm³, for example, the compacted density of the negative electrode active material layer may be 0.8 g/cm³, 0.9 g/cm³, 1 g/cm³, 1.1 g/cm³, 1.2 g/cm³, or any range composed of any two of these values. Controlling the compacted density of the negative electrode active material layer within the above range increases the content of the negative electrode active material per unit area, thereby enhancing the energy density of secondary batteries.

This application does not specifically limit the negative electrode current collector, as long as the purpose of this application can be achieved. For example, the negative electrode current collector may include aluminum foil, copper foil, copper alloy foil, nickel foil, stainless steel foil, titanium foil, nickel foam, copper foam, or a polymer substrate coated with a conductive metal, where the conductive metal includes, but is not limited to, copper, nickel, or titanium, and the material of the polymer substrate includes, but is not limited to, at least one of polyethylene, polypropylene, ethylene-propylene copolymer, polyethylene terephthalate, polyethylene naphthalate, or poly(p-phenylene terephthalamide). In this application, the thicknesses of the negative electrode current collector and the negative electrode active material layer are not specifically limited, as long as the purpose of this application can be achieved. For example, the thickness of the negative electrode current collector ranges from 4 µm to 12 µm, and the thickness of the single-sided negative electrode active material layer ranges from 30 µm to 130 µm. In this application, the negative electrode active material layer can be disposed on one or both surfaces of the negative electrode current collector in the thickness direction of the negative electrode current collector. It should be noted that the "surface" herein may be the entire region or a partial region of the negative electrode current collector, which is not specifically limited in this application, as long as the purpose of this application can be achieved. Optionally, the negative electrode active material includes a thickener, and the thickener may include, but is not limited to, sodium carboxymethyl cellulose. The negative electrode active material layer of this application may further include a conductive agent and a binder.

This application does not specifically limit the above conductive agent and the above binder, as long as the purpose of this application can be achieved. For example, the conductive agent may include, but is not limited to, carbon materials, metals, or conductive polymers. The carbon materials may include at least one of conductive carbon black (Super P), carbon nanotubes (CNTs), carbon nanofibers, natural graphite, artificial graphite, flake graphite, carbon dots, or graphene. The metals may include metal powders or metal fibers of copper, iron, aluminum, or the like. The conductive polymers may include at least one of polythiophene, polypyrrole, polyaniline, poly(phenylene), or poly(phenylene vinylene). The binder may include, but is not limited to, at least one of polypropylene alcohol, sodium polyacrylate, potassium polyacrylate, lithium polyacrylate, polyimide, polyamide-imide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber (SBR), polyvinyl alcohol (PVA), polyvinylidene fluoride (PVDF), polytetrafluoroethylene (PTFE), polyvinyl butyral, water-based acrylic resin, carboxymethyl cellulose (CMC), or sodium carboxymethyl cellulose (CMC-Na).

This application does not specifically limit the positive electrode plate, as long as the purpose of this application can be achieved. For example, the positive electrode plate includes a positive electrode current collector and a positive electrode active material layer disposed on at least one surface of the positive electrode current collector. This application does not specifically limit the positive electrode current collector, as long as the purpose of this application can be achieved. For example, the positive electrode current collector may include a metal foil or a composite current collector. For example, the metal foil is an aluminum foil. The composite current collector may include a polymer material base layer and a metal material layer disposed on at least one surface of the polymer material base layer. For example, the material of the metal material layer may include at least one of aluminum, aluminum alloy, nickel, nickel alloy, titanium, titanium alloy, silver, or silver alloy. The polymer material base layer may include at least one of polypropylene, polyethylene terephthalate, polybutylene terephthalate, polystyrene, or polyethylene. The positive electrode active material layer in this application includes a positive electrode active material. This application does not specifically limit the type of the positive electrode active material, as long as the purpose of this application can be achieved.

In some embodiments, the secondary battery is a lithium-ion battery, and the positive electrode active material may include a lithium transition metal oxide, where the lithium transition metal oxide may include, but is not limited to, at least one of lithium nickel cobalt manganese oxide (NCM811, NCM622, NCM523, and NCM111), lithium nickel cobalt aluminate, lithium iron phosphate, lithium-rich manganese-based material, lithium cobalt oxide (LiCoO₂), lithium manganese oxide, lithium manganese iron phosphate, or lithium titanate. In other embodiments, the secondary battery is a sodium-ion battery, and the positive electrode active material may include at least one of a sodium transition metal oxide, a polyanionic compound, or a Prussian blue compound. The sodium transition metal oxide may include Na₁₋ₓCuₕFeₖMnₗM¹ₘO_{2-y}, Na_{0.67}Mn_{0.7}Ni_{z}M²_{0.3-z}O₂, NaₐLi_{b}Ni_{c}Mn_{d}FeₑO₂, where M¹ is at least one of Li, Be, B, Mg, Al, K, Ca, Ti, Co, Ni, Zn, Ga, Sr, Y, Nb, Mo, In, Sn, or Ba, 0 < x ≤ 0.33, 0 < h ≤ 0.24, 0 ≤ k ≤ 0.32, 0 < 1 ≤ 0.68, 0 ≤ m < 0.1, h + k + l + m = 1, 0 ≤ y < 0.2; M² is at least one of Li, Mg, Al, Ca, Ti, Fe, Cu, Zn, or Ba, 0 < z ≤ 0.1; 0.67 < a ≤ 1, 0 < b < 0.2, 0 < c < 0.3, 0.67 < d + e < 0.8, b + c + d + e = 1. The polyanionic compound may include, but is not limited to, A¹_{f}M³_{g}(PO₄)ᵢOⱼX¹₃₋ⱼ, NaₙM⁴PO₄X², NaₚM⁵_{q}(SO₄)₃, NaₛMnₜFe₃₋ₜ(PO₄)₂(P₂O₇), where A¹ is at least one of H, Li, Na, K, or NH₄, M³ is at least one of Ti, Cr, Mn, Fe, Co, Ni, V, Cu, or Zn, X¹ is at least one of F, Cl, or Br, 0 < f ≤ 4, 0 < g ≤ 2, 1 ≤ i ≤ 3, and 0 ≤ j ≤ 2; M⁴ is at least one of Mn, Fe, Co, Ni, Cu, or Zn, X² is at least one of F, Cl, or Br, and 0 < n ≤ 2; and M⁵ is at least one of Mn, Fe, Co, Ni, Cu, or Zn, 0 < p ≤ 2, 0 < q ≤ 2; 0 < s ≤ 4, and 0 ≤ t ≤ 3. The Prussian blue compound may include, but is not limited to, at least one of Na₂Fe[Fe(CN)₆], Na₂Mn[Fe(CN)₆], or Na₂Mn[Mn(CN)₆].

This application does not specifically limit the thicknesses of the positive electrode current collector and the positive electrode active material layer, as long as the purpose of this application can be achieved. For example, the thickness of the positive electrode current collector ranges from 5 µm to 20 µm, preferably from 6 µm to 18 µm. The thickness of the single-sided positive electrode active material layer ranges from 30 µm to 120 µm. In this application, the positive electrode active material layer may be disposed on one or both surfaces of the positive electrode current collector in the thickness direction of the positive electrode current collector. It should be noted that the "surface" herein may be the entire region or a partial region of the positive electrode current collector, which is not specifically limited in this application, as long as the purpose of this application can be achieved. The positive electrode active material layer of this application may further include the above conductive agent and the above binder.

In one embodiment, the electrolyte includes a lithium salt and a non-aqueous solvent. The lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoro(oxalato)borate. This application does not specifically limit the concentration of the lithium salt in the electrolyte, as long as the purpose of this application can be achieved. In another embodiment, the electrolyte includes a sodium salt and a non-aqueous solvent. The sodium salt may include at least one of NaPF₆, NaClO₄, NaBCl₄, NaSO₃CF₃, or Na(CH₃)C₆H₄SO₃. This application does not specifically limit the concentration of the sodium salt in the electrolyte, as long as the purpose of this application can be achieved. The above non-aqueous solvent is not specifically limited, as long as the purpose of this application can be achieved, for example, the non-aqueous solvent may include, but is not limited to, at least one of a carbonate compound, a carboxylate compound, an ether compound, or other organic solvents. The carbonate compound may include, but is not limited to, at least one of a linear carbonate compound, a cyclic carbonate compound, or a fluorocarbonate compound. The linear carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The above ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The above other organic solvents may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The secondary battery of this application further includes a separator configured to separate the positive electrode plate and the negative electrode plate, and prevent internal short circuits in the secondary battery, allowing electrolyte ions to pass freely, and not affecting the electrochemical charge-discharge process. This application does not specifically limit the separator, as long as the purpose of this application can be achieved, for example, the material of the separator may include, but is not limited to, at least one of polyethylene (PE), polypropylene (PP), a polytetrafluoroethylene-based polyolefin (PO) separator, a polyester film (such as a polyethylene terephthalate (PET) film), a cellulose film, a polyimide film (PI), a polyamide film (PA), spandex, or an aramid film. The type of the separator may include, but is not limited to, at least one of a woven film, a non-woven film (non-woven fabric), a microporous film, a composite film, a laminated film, or a spun film. The separator of this application may have a porous structure, with a porous layer disposed on at least one surface of the separator, where the porous layer includes inorganic particles and a binder, and the inorganic particles may include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may include at least one of polyvinylidene fluoride, a copolymer of vinylidene fluoride-hexafluoropropylene, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene. This application does not specifically limit the pore size of the porous structure, as long as the purpose of this application can be achieved, for example, the pore size may range from 0.01 µm to 1 µm. This application does not specifically limit the thickness of the separator, as long as the purpose of this application can be achieved. For example, the thickness of the separator may range from 5 µm to 500 µm.

The secondary battery in this application further includes a packaging bag configured to accommodate the positive electrode plate, the separator, the negative electrode plate, the electrolyte, and other known components of secondary batteries in the art. This application does not limit the other components. This application does not specifically limit the packaging bag and can use any well-known packaging bag in the art, as long as the purpose of this application can be achieved. For example, an aluminum-plastic film packaging bag can be used.

The secondary battery in this application is not specifically limited and may include any apparatus in which electrochemical reactions occur. In one embodiment of this application, the secondary battery may include, but is not limited to, a lithium-ion battery, a sodium-ion battery, a lithium polymer secondary battery, or a lithium-ion polymer secondary battery.

The preparation process of the secondary battery in this application is well known to those skilled in the art and is not specifically limited in this application. For example, the preparation process may include, but is not limited to, the following steps: stacking a positive electrode plate, a separator, and a negative electrode plate in sequence, subjecting the resulting stack to operations such as winding and folding as required to obtain an electrode assembly with a wound structure, placing the electrode assembly into a packaging bag, injecting an electrolyte into the packaging bag, and sealing the packaging bag to obtain a secondary battery; alternatively, stacking a positive electrode plate, a separator, and a negative electrode plate in sequence, fixing the four corners of the entire stacked structure with tapes to obtain an electrode assembly with a stacked structure, placing the electrode assembly into a packaging bag, injecting an electrolyte into the packaging bag, and sealing the packaging bag to obtain a secondary battery. Additionally, if necessary, an overcurrent prevention element, a guide plate, and the like can be placed in the packaging bag as required to prevent pressure increase, overcharge, and overdischarge in the secondary battery.

A fourth aspect of this application provides an electronic device including the secondary battery provided in the third aspect of this application. The secondary battery provided in the third aspect of this application has high energy density and good cycle performance, thereby providing an electronic device with a longer service life in the fourth aspect of this application.

The electronic device of this application is not specifically limited and may be any electronic device known in the prior art. In some embodiments, the electronic device may include, but is not limited to, notebook computers, pen-input computers, mobile computers, e-book players, portable phones, portable fax machines, portable copiers, portable printers, head-mounted stereo headsets, video recorders, LCD TVs, portable cleaners, portable CD players, mini-disc players, transceivers, electronic notebooks, calculators, memory cards, portable recorders, radios, backup power supplies, motors, automobiles, motorcycles, assisted bicycles, bicycles, lighting fixtures, toys, gaming consoles, clocks, power tools, flashlights, cameras, large household batteries, or lithium-ion capacitors.

### Examples

Below, examples and comparative examples are provided to more specifically illustrate the embodiments of this application. Various tests and evaluations are conducted according to the methods described below. Additionally, unless otherwise specified, "part" and "%" are based on weight.

### Test methods and devices

### Raman test

The Raman spectrum of the hard carbon material was tested using a Raman spectrometer. A powder sample of the hard carbon material was taken for testing, selecting a range of 200 µm × 500 µm, within which more than 200 points were tested at equal intervals, with the test range of each point being between 1000 cm⁻¹ and 2000 cm⁻¹; the peak appearing between 1320 cm⁻¹ and 1370 cm⁻¹ was recorded as the D peak, and the peak appearing between 1570 cm⁻¹ and 1620 cm⁻¹ was recorded as the G peak. The ratio of I_{D}/I_{G} for each point was calculated, and the average value of multiple points was computed as the final I_{D}/I_{G} ratio. Here, I_{D} represents the peak area of the D peak in the Raman spectrum of the hard carbon material, and I_{G} represents the peak area of the G peak in the Raman spectrum of the hard carbon material.

### X-ray diffraction (XRD) test

The X-ray diffraction spectrum of the hard carbon material was tested and analyzed using an X-ray powder diffractometer (XRD, instrument model: Bruker D8 ADVANCE) to obtain the position of the XRD 002 peak of the hard carbon material.

### Scanning electron microscope (SEM) test

The particles of the hard carbon material were observed, and SEM photographs were taken using a scanning electron microscope tester (instrument model: ZEISSSEM).

### Powder particle size test

The particle size distribution of the hard carbon material was tested using a Malvern particle size analyzer (instrument model: Master Sizer 2000). In the volume-based particle size distribution of the material, the particle size at which the cumulative volume reaches 50% from the smallest particle size is denoted as Dv50, and the particle size at which the cumulative volume reaches 99% from the smallest particle size is denoted as Dv99.

### Pore size distribution test

A powder sample of the hard carbon material was taken, pressed under a weight of 5 tons for 30 seconds, placed in a sample tube, and degassed under vacuum at 100°C for 12 h. The adsorption amount of carbon dioxide by the hard carbon material under different gas pressures was tested using an ASAP2460 physical adsorption analyzer, and adsorption and desorption isotherms were plotted. The pore shape was determined based on the shape of the hysteresis loop, the pore diameter distribution curve of the micropores was fitted using the DFT model, and the pore volume of the ultramicropores, the pore volume of the micropores, and the total pore volume in the hard carbon material were calculated. The proportion of the pore volume of the micropores to the total pore volume = pore volume of the micropores / total pore volume; the proportion of the pore volume of the ultramicropores to the total pore volume = pore volume of the ultramicropores / total pore volume.

### Elemental analysis test

The proportions and contents of C, O, N, and S elements in the hard carbon material were tested using X-ray photoelectron spectroscopy (instrument model: ThermoESCALAB250XI), selecting three different locations on the same material, testing the contents of the above elements, and calculating their mass percentages.

The percentage of the mass of the oxygen element in the carbonyl group and the carboxyl group to the total mass of the oxygen element in the hard carbon material was tested using X-ray photoelectron spectroscopy. The O 1s peak in the X-ray photoelectron spectrum was deconvoluted and fitted, with peaks near 530.8 eV and 533.9 eV corresponding to carbonyl oxygen and carboxyl oxygen, respectively; the ratio of the corresponding peak area to the total O 1s peak area yields the proportion of the mass of the oxygen element in the carbonyl group and the proportion of the oxygen element in the carboxyl group to the total mass of the oxygen element in the hard carbon material, respectively.

### Electrical conductivity test

The electrical conductivity of the hard carbon material was tested using a four-probe powder conductivity tester (instrument model: Suzhou Jingge ST2742B), with a test pressure of 5 MPa, a temperature of 25°C, a humidity of 65%, and each sample tested three times to obtain an average value.

### Total lithium storage specific capacity and first efficiency test of the hard carbon material

The first reversible specific capacity of the hard carbon material within 0 V to 2.5 V was obtained through the following test method: the hard carbon material, styrene-butadiene rubber as a binder, and sodium carboxymethyl cellulose as a thickener were mixed at a mass ratio of 97:1.5:1.5, deionized water was added as a solvent to prepare a slurry with a solid content of 40 wt%, the slurry was applied on one side of a copper foil negative electrode current collector to obtain a negative electrode plate, the negative electrode plate was cut into a disc with a diameter of 14 mm as the working electrode, a lithium disc was used as the counter electrode, a porous polyethylene film (provided by Celgard) was used as the separator, and an electrolyte was injected to assemble a coin cell; the coin cell was first discharged to 0 V at three stages of small currents of 0.05 C/0.01 C/0.005 C, recording the first discharge capacity of the coin cell; then charged at a constant current of 0.1 C to 2.5 V, recording the first charge capacity of the coin cell. The mass of the hard carbon material in the negative electrode plate was calculated based on the coating weight and area of the slurry during the above electrode plate preparation process. First efficiency = first charge capacity / first discharge capacity × 100%; the first reversible specific capacity of the hard carbon material within 0 V to 2.5 V, that is, the total lithium storage specific capacity Q = first charge capacity / mass of the hard carbon material, with the unit being mAh/g. The specific capacity of the hard carbon material within the potential range of 0 V to 0.1 V relative to Li/Li⁺ is denoted as Q₁; and the specific capacity of the hard carbon material within the potential range of 0 V to 0.8 V relative to Li/Li⁺ is denoted as Q₂.

The above electrolyte includes a base solvent and a lithium salt, where the base solvent was obtained by mixing ethylene carbonate (EC) and diethyl carbonate (DEC) at a mass ratio of 1:1, the lithium salt was LiPF₆, and the lithium salt concentration was 1 mol/L.

The total lithium storage specific capacity and first efficiency test of the graphite in Comparative Example 1 were conducted using the same method as the total lithium storage specific capacity and first efficiency test of the hard carbon material described above.

### Total sodium storage specific capacity and first efficiency test of the hard carbon material

The test method for the sodium storage specific capacity and first efficiency of the hard carbon material was the same as the total lithium storage specific capacity and first efficiency test method of the hard carbon material described above, except that a sodium disc replaced the lithium disc as the counter electrode, aluminum foil as the negative electrode current collector, and the sodium salt NaPF₆ replaced the lithium salt. The total sodium storage specific capacity of the hard carbon material within the potential range of 0 V to 2.5 V relative to Na/Na⁺ is denoted as R; the specific capacity of the hard carbon material within the potential range of 0 V to 0.5 V relative to Na/Na⁺ is denoted as R₁; the specific capacity of the carbon material within the potential range of 0 V to 0.8 V relative to Na/Na⁺ is denoted as R₂.

### Compacted density test of the negative electrode active material layer

A lithium-ion battery discharged to 2 V at 1 C was taken, the negative electrode plate was disassembled, cleaned, and dried, the negative electrode plate with an area of S was weighed using an electronic balance, with the weight recorded as W₁, and the thickness of the negative electrode plate was measured using a micrometer, recorded as T₁. The negative electrode active material layer was washed off using the solvent DMC, the negative electrode plate was dried, and the weight of the negative electrode current collector was measured, recorded as W₂, with the thickness of the negative electrode current collector measured using a micrometer, recorded as T₂. The weight W₀ and thickness T₀ of the negative electrode active material layer disposed on one side of the negative electrode current collector, as well as the compacted density of the negative electrode active material layer, were calculated using the following formulas: W₀ = W₁ - W₂, T₀ = T₁ - T₂, compacted density = W₀ / (T₀ × S).

### Energy density (ED) test

In an environment of 25°C, the lithium-ion battery was charged at a constant current of 0.2 C to a voltage of 4.48 V (or the sodium-ion battery was charged at a constant current of 0.2 C to a voltage of 3.95 V), then charged at a constant voltage until the current reached 0.02 C; discharged at a constant current of 0.2 C to a voltage of 2 V, this was recorded as one cycle, and the discharge capacity C and discharge energy E of this cycle were recorded, where E is the full discharge energy; the length, width, and height of the battery at 50% state of charge were measured to obtain the battery volume Vₘ. Average discharge voltage U = E / C; and energy density ED = E / Vₘ.

### Cycle performance test

Five samples for each of the lithium-ion batteries or sodium-ion batteries prepared in each example and comparative example were taken. The following steps were repeated for charging and discharging the lithium-ion batteries or sodium-ion batteries, and the average value of the five battery samples was calculated to obtain the capacity retention rate.

For lithium-ion batteries, first, in an environment of 25°C, the first charge and discharge were performed, charging at a constant current of 0.7 C until reaching a voltage of 4.48 V, then switching to constant voltage charging until the current reached 0.02 C. Then discharging at a constant current of 1 C until the voltage reached 2 V, recording the discharge capacity of the first cycle; subsequently, 400 charge-discharge cycles were performed according to the above charging and discharging process, recording the discharge capacity of the 400th cycle. Capacity retention rate (%) = (discharge capacity of the 400th cycle / discharge capacity of the first cycle) × 100%.

For sodium-ion batteries, first, in an environment of 25°C, the first charge and discharge were performed, charging at a constant current of 0.5 C until reaching a voltage of 3.95 V, then switching to constant voltage charging until the current reached 0.02 C. Then discharging at a constant current of 1 C until the voltage reached 2 V, recording the discharge capacity of the first cycle; subsequently, 400 charge-discharge cycles were performed according to the above charging and discharging process, recording the discharge capacity of the 400th cycle. Capacity retention rate (%) = (discharge capacity of the 400th cycle / discharge capacity of the first cycle) × 100%.

### Example 1-1

### <Preparation of negative electrode active material>

A precursor alkali lignin with a mass m of 20 g was taken and placed in a 500 mL reactor - a graphite crucible with a lid, and the gas in the reactor was replaced with a first gas, air. The reactor was sealed and transferred to a box furnace for primary calcination under nitrogen protection, heating at a rate of 5°C/min to a primary calcination temperature T₁ = 700°C, with a primary calcination time t₁ of 2 h, followed by cooling. Then, the pre-carbonized material powder in the reactor was transferred to a nitrogen atmosphere protection furnace for secondary calcination, heating at a rate of 2°C/min to a secondary calcination temperature T₂ = 1100°C, carbonizing for 2 h, cooling, and after cooling, the carbonized material was obtained, crushed to obtain a powder, and the powder was classified according to particle size, controlling the particle size Dv99 of the classified powder at 40 µm and Dv50 at 10 µm. Then, the classified powder was transferred to a nitrogen atmosphere protection furnace, heating at a rate of 5°C/min to a vapor deposition temperature T₃ = 900°C, subsequently replacing the gas atmosphere with a mixed gas of a reducing gas methane and argon, with a vapor deposition time t₃ of 2 h, terminating the vapor deposition and cutting off the above mixed gas, replacing with nitrogen, and cooling to room temperature to obtain a hard carbon material with a Dv50 of 18 µm, that is, the negative electrode active material. Based on the mass of the mixed gas, the mass percentage of the reducing gas methane was 20%.

### <Preparation of negative electrode plate>

The negative electrode active material hard carbon material prepared above, styrene-butadiene rubber as a binder, and sodium carboxymethyl cellulose as a thickener were mixed at a mass ratio of 97:1.5:1.5, deionized water was added as a solvent to prepare a negative electrode slurry with a solid content of 40 wt%, and the slurry was stirred uniformly. The negative electrode slurry was uniformly applied on one surface of a copper foil negative electrode current collector with a thickness of 6 µm, the copper foil was dried at 85°C for 4 h, obtaining a negative electrode plate with a single-sided coating of the negative electrode active material layer with a thickness of 50 µm. After cold pressing, cutting, and slitting, drying was performed under vacuum at 120°C for 12 h, obtaining a negative electrode plate with specifications of 76.6 mm × 875 mm.

### <Preparation of positive electrode plate>

Lithium cobalt oxide as the positive electrode active material, conductive carbon black (Super P) as the conductive agent, and PVDF as the binder were mixed at a mass ratio of 97:1.4:1.6, N-methylpyrrolidone (NMP) was added as a solvent, stirred uniformly, and prepared into a positive electrode slurry with a solid content of 72 wt%. The positive electrode slurry was uniformly applied onto a surface of an aluminum foil positive electrode current collector with a thickness of 13 µm and dried at 85°C to obtain a positive electrode plate having a positive electrode active material applied on one surface, with a positive electrode active material layer of 80 µm in thickness. After cold pressing, cutting, and slitting, drying was performed under vacuum at 85°C for 4 h, obtaining a positive electrode plate with specifications of 74 mm × 867 mm.

### <Preparation of electrolyte>

In a dry argon atmosphere glove box, a base solvent of ethylene carbonate (EC), propylene carbonate (PC), and diethyl carbonate (DEC) was mixed at a mass ratio of EC:PC:DEC = 1:1:1, fluoroethylene carbonate was added, dissolved, and thoroughly stirred, then lithium salt LiPF₆ was added, mixed uniformly to obtain the electrolyte. Based on the mass of the electrolyte, the mass percentage of the lithium salt was 12.5%, the mass percentage of fluoroethylene carbonate was 3.5%, and the remainder was the base solvent.

### <Preparation of separator>

A polyethylene film with a thickness of 7 µm (provided by Celgard) was used as the separator.

### <Preparation of lithium-ion battery>

The positive electrode plate, separator, and negative electrode plate prepared above were stacked in sequence, ensuring the separator was positioned between the positive electrode plate and the negative electrode plate for isolation, then wound to obtain an electrode assembly. After welding tabs, the electrode assembly was placed into an aluminum-plastic film packaging bag, dried in a vacuum oven at 80°C for 12 h to remove moisture, the prepared electrolyte was injected, and processes such as vacuum sealing, standing, formation, degassing, and shaping were performed to obtain a lithium-ion battery.

### Examples 1-2 to 1-14

Except for adjusting the preparation parameters according to Table 1, the rest was the same as in Example 1-1.

**Table 1**

| | m (g) | t₁ (h) | T₁ (°C) | t₃ (h) | First gas | Precursor | Particle size Dv50 of classified powder (µm) |
|---|---|---|---|---|---|---|---|
| Example 1-1 | 20 | 2 | 700 | 2 | Air | Alkali lignin | 10 |
| Example 1-2 | 30 | 2 | 700 | 2 | Air | Alkali lignin | 10 |
| Example 1-3 | 50 | 2 | 700 | 2 | Air | Alkali lignin | 10 |
| Example 1-4 | 100 | 2 | 700 | 2 | Air | Alkali lignin | 10 |
| Example 1-5 | 20 | 2 | 700 | 4 | Air | Alkali lignin | 10 |
| Example 1-6 | 20 | 2 | 700 | 6 | Air | Alkali lignin | 10 |
| Example 1-7 | 20 | 4 | 700 | 4 | Air | Alkali lignin | 10 |
| Example 1-8 | 20 | 2 | 900 | 4 | Air | Alkali lignin | 10 |
| Example 1-9 | 20 | 2 | 900 | 6 | Air | Alkali lignin | 10 |
| Example 1-10 | 20 | 4 | 900 | 4 | Air | Alkali lignin | 10 |
| Example 1-11 | 20 | 2 | 900 | 4 | CO₂ | Alkali lignin | 10 |
| Example 1-12 | 20 | 2 | 900 | 4 | O₂ | Alkali lignin | 10 |
| Example 1-13 | 20 | 2 | 900 | 4 | Air | Industrial lignin | 10 |
| Example 1-14 | 20 | 2 | 900 | 4 | Air | Phenolic resin | 10 |

### Example 2-1

### <Preparation of negative electrode active material>

Except for adjusting the secondary calcination temperature T₂ to 1300°C, the rest was the same as in Example 1-5.

### <Preparation of negative electrode plate>

Except for mixing the negative electrode active material prepared above, styrene-butadiene rubber as a binder, and sodium carboxymethyl cellulose as a thickener at a mass ratio of 97:2:1, and replacing copper foil with aluminum foil as the negative electrode current collector, the rest was the same as in Example 1-5.

### <Preparation of positive electrode plate>

Except for replacing the positive electrode active material lithium cobalt oxide with copper-nickel-iron-manganese oxide (NaCu_{1/9}Ni_{2/9}Fe_{1/3}Mn_{1/3}O₂), the rest was the same as in Example 1-5.

### <Preparation of electrolyte>

In a dry argon atmosphere glove box, a base solvent of ethylene carbonate (EC) and diethyl carbonate (DEC) was mixed at a mass ratio of 50:50, fluoroethylene carbonate was added, dissolved, and thoroughly stirred, then sodium salt NaPF₆ was added, mixed uniformly to obtain the electrolyte. Based on the mass of the electrolyte, the mass percentage of the sodium salt was 12.5%, the mass percentage of fluoroethylene carbonate was 3.5%, and the remainder was the base solvent.

### <Preparation of separator>

PVDF and aluminum oxide ceramic were mixed at a mass ratio of 9:1, deionized water was added as a solvent to prepare a slurry with a solid content of 12 wt%, the slurry was stirred uniformly and uniformly applied on one surface of a 9 µm thick polyethylene (provided by Celgard) porous polymer film, and after drying, a separator with a single-sided coating of a 2 µm aluminum oxide ceramic layer was obtained.

### <Preparation of sodium-ion battery>

The positive electrode plate, separator, and negative electrode plate prepared above were stacked in sequence, with the side of the separator coated with the aluminum oxide ceramic layer facing the positive electrode plate, ensuring the separator was positioned between the positive electrode plate and the negative electrode plate for isolation, then wound to obtain an electrode assembly. After welding tabs, the electrode assembly was placed into an aluminum-plastic film packaging bag, dried in a vacuum oven at 80°C for 12 h to remove moisture, the prepared electrolyte was injected, and processes such as vacuum sealing, standing, formation, degassing, and shaping were performed to obtain a sodium-ion battery.

### Example 2-2

### <Preparation of negative electrode active material>

Except for adjusting the secondary calcination temperature T₂ to 1300°C, the rest was the same as in Example 1-7.

<Preparation of negative electrode plate>, <Preparation of positive electrode plate>, <Preparation of electrolyte>, <Preparation of separator>, and <Preparation of sodium-ion battery> were the same as in Example 2-1.

### Example 2-3

### <Preparation of negative electrode active material>

Except for adjusting the secondary calcination temperature T₂ to 1300°C, the rest was the same as in Example 1-8.

<Preparation of negative electrode plate>, <Preparation of positive electrode plate>, <Preparation of electrolyte>, <Preparation of separator>, and <Preparation of sodium-ion battery> were the same as in Example 2-1.

### Example 2-4

Except for adjusting the secondary calcination temperature T₂ to 1300°C, the rest was the same as in Example 1-10.

<Preparation of negative electrode plate>, <Preparation of positive electrode plate>, <Preparation of electrolyte>, <Preparation of separator>, and <Preparation of sodium-ion battery> were the same as in Example 2-1.

### Comparative Example 1

Except for replacing the negative electrode active material prepared in <Preparation of negative electrode active material> with artificial graphite, the rest was the same as in Example 1-1.

### Comparative Example 2

Except for using the negative electrode active material prepared in the following <Preparation of negative electrode active material>, the rest was the same as in Example 1-1.

### <Preparation of negative electrode active material>

A precursor alkali lignin with a mass of 20 g was taken and placed in a box furnace for secondary calcination under a nitrogen atmosphere, heating at a rate of 2°C/min to a secondary calcination temperature T₂ = 1100°C, carbonizing for 2 h, cooling, and after cooling, the carbonized material was obtained, crushed to obtain a powder, and the powder was classified according to particle size, controlling the particle size Dv99 of the powder at 40 µm and Dv50 at 10 µm. Then, the classified powder was transferred to a nitrogen atmosphere protection furnace, heating at a rate of 5°C/min to a vapor deposition temperature T₃ = 900°C, subsequently replacing the gas atmosphere with a mixed gas of a reducing gas methane and argon, with a vapor deposition time t₃ of 2 h, terminating the vapor deposition and cutting off the mixed gas, replacing with nitrogen, and cooling to room temperature to obtain a hard carbon material with a Dv50 of 18 µm, that is, the negative electrode active material. Based on the mass of the mixed gas, the mass percentage of the reducing gas methane was 20%.

### Comparative Example 3

Except for using the negative electrode active material prepared in the following <Preparation of negative electrode active material>, the rest was the same as in Example 1-1.

### <Preparation of negative electrode active material>

A precursor alkali lignin with a mass of 20 g was taken and placed in a 500 mL reactor with a lid made of graphite, and the gas in the reactor was replaced with a first gas, air. The reactor was sealed and transferred to a box furnace for primary calcination under nitrogen protection, heating at a rate of 5°C/min to a primary calcination temperature T₁ = 700°C, with a primary calcination time t₁ of 2 h, followed by cooling. The powder after primary calcination was crushed and classified, controlling the particle size Dv99 of the powder at 40 µm and Dv50 at 10 µm. Then, the classified powder was transferred to a nitrogen atmosphere protection furnace, heating at a rate of 5°C/min to a vapor deposition temperature T₃ = 900°C, subsequently replacing the gas atmosphere with a mixed gas of a reducing gas methane and argon, with a vapor deposition time t₃ of 2 h, terminating the vapor deposition and cutting off the mixed gas, replacing with nitrogen, and cooling to room temperature to obtain a hard carbon material with a Dv50 of 18 µm, that is, the negative electrode active material. Based on the mass of the mixed gas, the mass percentage of the reducing gas methane was 20%.

### Comparative Example 4

### <Preparation of negative electrode active material>

Except for adjusting the secondary calcination temperature T₂ to 1300°C, the rest was the same as in Comparative Example 2.

<Preparation of negative electrode plate>, <Preparation of positive electrode plate>, <Preparation of electrolyte>, <Preparation of separator>, and <Preparation of sodium-ion battery> were the same as in Example 2-1.

The relevant parameters and performance test results of each example and each comparative example are shown in Tables 2 to 4 below. In Tables 2 to 4 below, the proportion of the pore volume of the micropores to the total pore volume is abbreviated as micropore proportion, the proportion of the pore volume of the ultramicropores to the total pore volume is abbreviated as ultramicropore proportion, and X represents the percentage of the mass of the oxygen element in the carbonyl group and the carboxyl group to the total mass of the oxygen element in the hard carbon material.

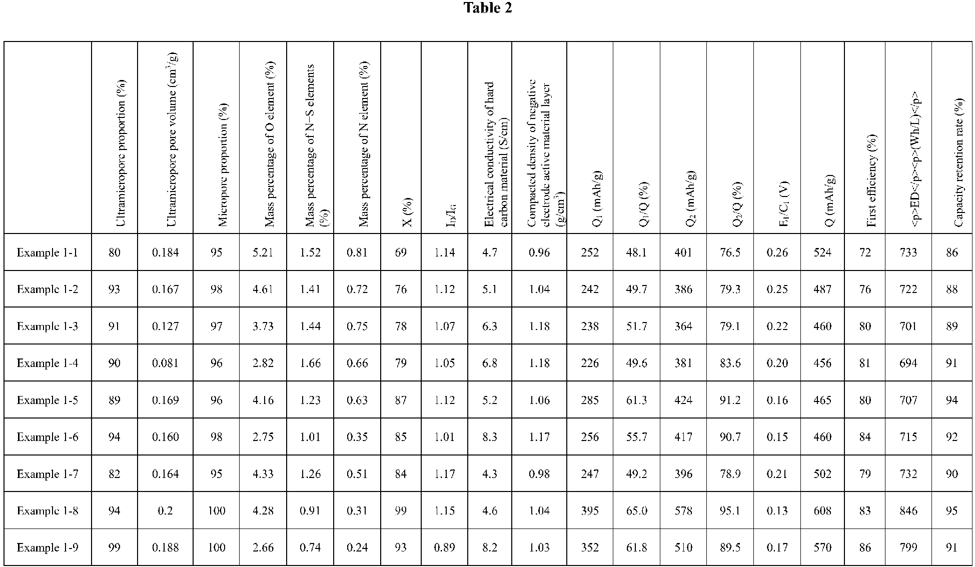

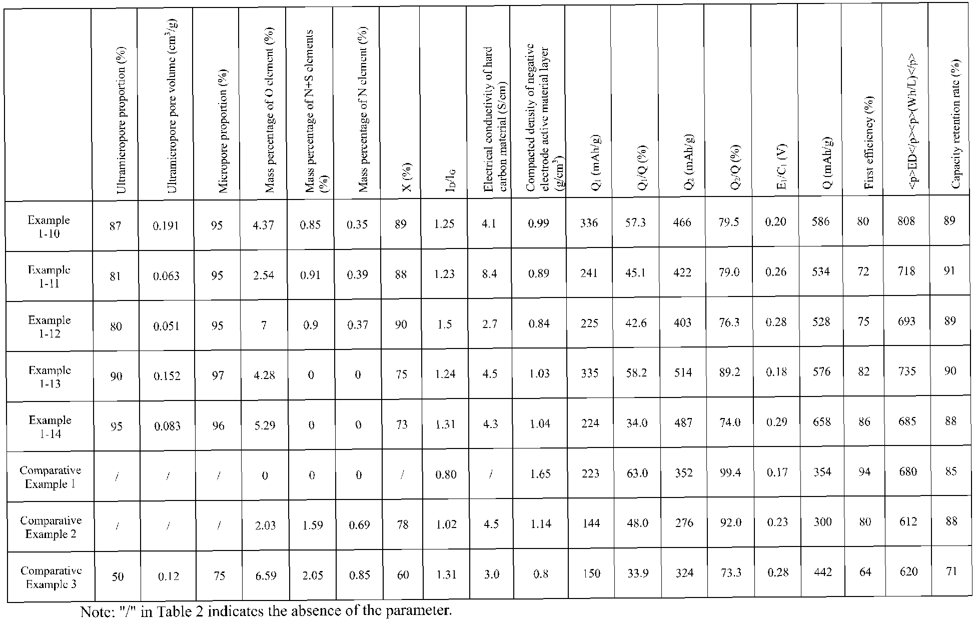

**Table 3**

| | Mass percentage of O element (%) | XRD 002 peak position | I_{D}/I_{G} | Electrical conductivity of hard carbon material (S/cm) | Q₁ (mAh/g) | Q₁/Q (%) | Q₂ (mAh/g) | Q₂/Q (%) | E₁/C₁ (V) | Q (mAh/g) | First efficiency (%) | ED (Wh/L) |
|---|---|---|---|---|---|---|---|---|---|---|---|---|
| Example 1-5 | 4.16 | 21.8 | 1.12 | 5.2 | 285 | 61.3 | 424 | 91.2 | 0.16 | 465 | 80 | 707 |
| Example 1-11 | 2.54 | 21.6 | 1.23 | 8.4 | 241 | 45.1 | 422 | 79.0 | 0.26 | 534 | 72 | 718 |
| Example 1-12 | 7 | 21.2 | 1.5 | 2.7 | 225 | 42.6 | 403 | 76.3 | 0.28 | 528 | 75 | 693 |

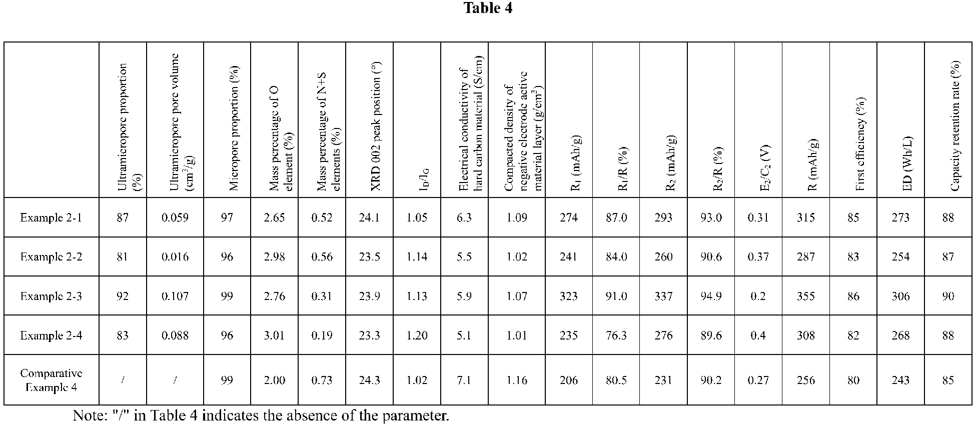

From Examples 1-1 to 1-14 and Comparative Examples 1 to 3 it can be seen that, the negative electrode active material includes a hard carbon material, where the micropore proportion, ultramicropore proportion, and ultramicropore pore volume of the hard carbon material are within the ranges of this application, the values of Q₁ and Q₂ are larger, and Q₁/Q and Q₂/Q can reach levels comparable to graphite materials, the hard carbon material exhibits a lower average delithiation potential, and exhibits a higher total lithium storage specific capacity Q and a higher first efficiency within 0 V to 2.5 V, indicating that the negative electrode active material provided in this application has a stable low-potential plateau, higher specific capacity, and higher reversible capacity. Lithium-ion batteries including the negative electrode active material of this application exhibit higher energy density and capacity retention rate, thereby demonstrating that the lithium-ion batteries provided in this application have higher energy density and better cycle performance.

The mass percentage of the oxygen element, the mass percentage of element A (N+S), the value of X, the value of I_{D}/I_{G}, and the electrical conductivity of the hard carbon material typically affect the performance of the negative electrode active material, such as the average delithiation potential, specific capacity, and first efficiency, thereby influencing the cycle performance and energy density of lithium-ion batteries. From Examples 1-1 to 1-14, when the above parameters are within the ranges of this application, the negative electrode active material exhibits a stable low-potential plateau, higher specific capacity, and higher reversible capacity, and the resulting lithium-ion batteries have higher energy density and capacity retention rate, thereby demonstrating that the lithium-ion batteries provided in this application have high energy density and good cycle performance.

The compacted density of the negative electrode active material layer typically affects the cycle performance and energy density of lithium-ion batteries. From Examples 1-1 to 1-14 it can be seen that, when the compacted density of the negative electrode active material layer is within the range of this application, the resulting lithium-ion batteries have higher energy density and capacity retention rate, thereby demonstrating that the lithium-ion batteries provided in this application have high energy density and good cycle performance.

From Examples 2-1 to 2-4 and Comparative Example 4 it can be seen that, the negative electrode active material includes a hard carbon material where the micropore proportion, ultramicropore proportion, and ultramicropore pore volume are within the ranges of this application, the values of R₁ and R₂ are larger, and the values of R₁/R and R₂/R are higher, the hard carbon material exhibits a lower average desodiation potential, and a higher total sodium storage specific capacity R and a higher first efficiency within 0 V to 2.5 V, indicating that the negative electrode active material provided in this application has a stable low-potential plateau, higher specific capacity, and higher reversible capacity. Sodium-ion batteries including the negative electrode active material of this application exhibit higher energy density and capacity retention rate, thereby demonstrating that the sodium-ion batteries provided in this application have higher energy density and better cycle performance.

Table 3 provides the positions of the 002 peak in the XRD diffraction patterns of the hard carbon materials of Examples 1-5, 1-11, and 1-12, where the 002 peak positions of the hard carbon materials of the above examples are between 21.2° and 21.8°, indicating that the hard carbon material has a large interplanar spacing, facilitating the intercalation of lithium ions between the layers of the hard carbon material. Table 3 also provides the mass percentage of the oxygen element and the electrical conductivity of the hard carbon materials of the above examples, showing that the mass percentage of the oxygen element is significantly influenced by the type of the first gas; specifically, when the first gas is CO₂, air, and O₂ in sequence, the mass percentage of the oxygen element increases sequentially, and the electrical conductivity of the hard carbon material decreases sequentially.

Table 4 provides the positions of the 002 peak in the XRD diffraction patterns of the hard carbon materials of Examples 2-1 to 2-4, where the 002 peak positions of the hard carbon materials of the above examples are between 23.3° and 24.9°, indicating that the hard carbon material has a large interplanar spacing, facilitating the intercalation of sodium ions between the layers of the hard carbon material.

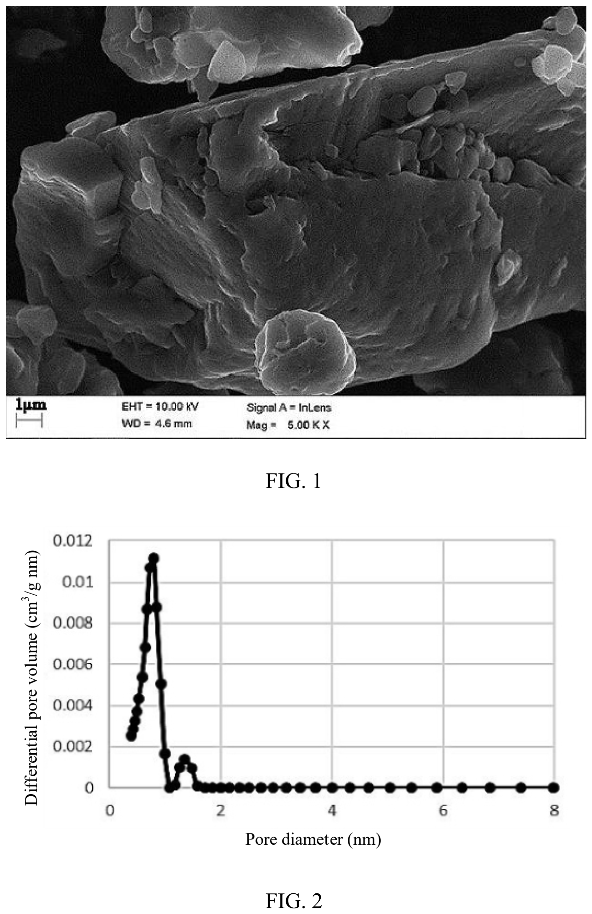

FIG. 1 shows a scanning electron microscope photograph of the hard carbon material prepared in Example 1-5, where the hard carbon material appears as irregular blocks with no obvious pore structure on the particle surface, indicating that no macropores appear on the surface of the hard carbon material. FIG. 2 shows a pore diameter distribution diagram of the hard carbon material prepared in Example 1-5 based on nitrogen adsorption-desorption, showing that the hard carbon material is dominated by micropores with a pore diameter less than 2 nm, while ultramicropores with a pore diameter less than 7 nm can be clearly observed, and no mesopores or macropores appear in the hard carbon material.

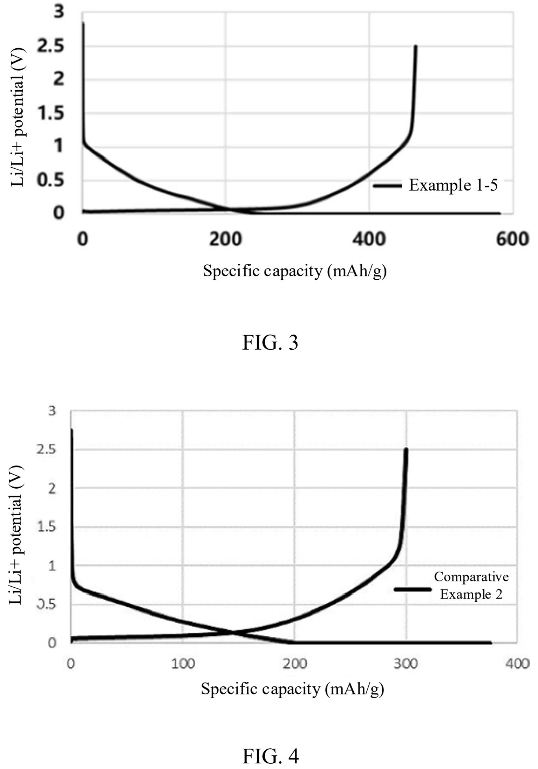

From FIG. 3 it can be seen that, within the potential ranges of 0 V to 0.1 V, 0 V to 0.8 V, and 0 V to 2.5 V relative to Li/Li⁺, the specific capacities of the hard carbon material of Example 1-5 are 285 mAh/g, 401 mAh/g, and 465 mAh/g, respectively, indicating that the hard carbon material of Example 1-5 has a high specific capacity and a low delithiation potential. From FIG. 4, within the potential ranges of 0 V to 0.1 V, 0 V to 0.8 V, and 0 V to 2.5 V relative to Li/Li⁺, the specific capacities of the hard carbon material of Comparative Example 2 are 144 mAh/g, 276 mAh/g, and 300 mAh/g, respectively, indicating that the hard carbon material of Comparative Example 2 has a lower specific capacity and a higher delithiation potential. Combining FIG. 3 and FIG. 4, compared to Comparative Example 2, the hard carbon material of Example 1-5 has a higher specific capacity and a lower delithiation potential.

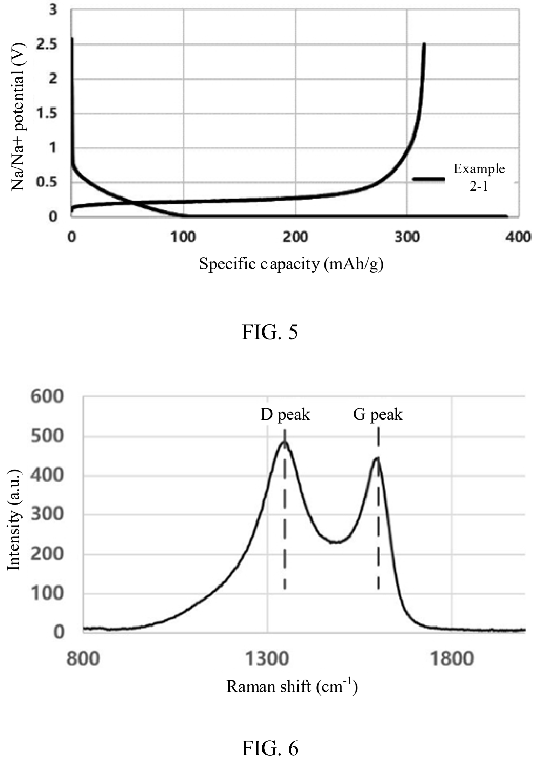

From FIG. 5 it can be seen that, the charge-discharge curve of the hard carbon material exhibits a distinct plateau, and within the potential ranges of 0 V to 0.5 V, 0 V to 0.8 V, and 0 V to 2.5 V relative to Na/Na⁺, the specific capacities of the hard carbon material of Example 2-1 are 274 mAh/g, 293 mAh/g, and 315 mAh/g, respectively. This indicates that the hard carbon material of Example 2-1 has a high specific capacity and a low desodiation potential.

FIG. 6 shows the Raman spectrum of the hard carbon material prepared in Example 1-5. In FIG. 6, the peak area of the D peak located between 1320 cm⁻¹ and 1370 cm⁻¹ is 58213, and the peak area of the G peak located between 1570 cm⁻¹ and 1620 cm⁻¹ is 51976, with a calculated I_{D}/I_{G} = 1.12. This indicates that the hard carbon material has an appropriate degree of defects, which is beneficial to enhancing the specific capacity of the hard carbon material.

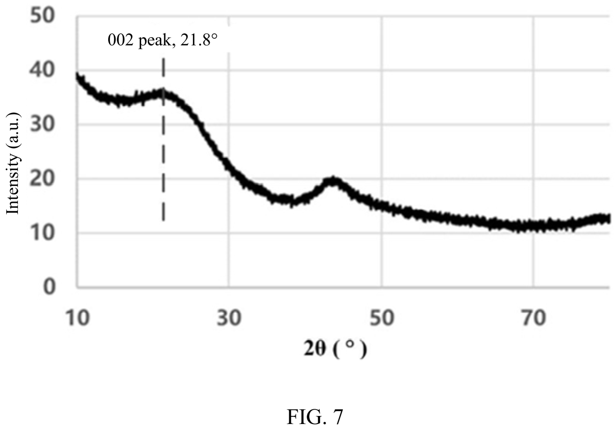

From FIG. 7 it can be seen that, the 002 peak position of the hard carbon material of Example 1-5 is at 21.8°, indicating that the hard carbon material has a large interplanar spacing, facilitating the intercalation of lithium ions between the layers of the hard carbon material.

It should be noted that in this document, relational terms such as first and second are merely used to distinguish one entity or operation from another entity or operation, and do not necessarily require or imply any such actual relationship or order between these entities or operations. In addition, the terms "include," "comprise," or any of their variants are intended to cover a non-exclusive inclusion, such that a process, method, or article that includes a series of elements includes not only those elements but also other elements that are not expressly listed, or further includes elements inherent to such process, method, or article.

Embodiments in this specification are described in a related manner. For a part that is the same or similar between different embodiments, reference can be made between the embodiments. Each embodiment focuses on differences from other embodiments.

The foregoing descriptions are merely preferred examples of this application and are not intended to limit the protection scope of this application. Any modification, equivalent replacement, improvement, and the like made within the spirit and principles of this application are included in the protection scope of this application.

## Claims

1. A negative electrode active material, wherein the negative electrode active material comprises a hard carbon material; wherein the hard carbon material contains micropores and ultramicropores, a pore diameter of the micropores is less than 2 nm, a pore diameter of the ultramicropores is less than 0.7 nm; a pore volume of the micropores accounts for 95% to 100% of a total pore volume, a pore volume of the ultramicropores ranges from 0.01 cm³/g to 0.2 cm³/g, and the pore volume of the ultramicropores accounts for 80% to 99% of the total pore volume.

2. The negative electrode active material according to claim 1, wherein the hard carbon material contains a carbon element and an oxygen element, and a mass percentage of the oxygen element in the hard carbon material ranges from 2% to 7%.

3. The negative electrode active material according to claim 2, wherein a form of the oxygen element in the hard carbon material comprises a carbonyl group and a carboxyl group, and a mass of the oxygen element in the carbonyl group and the carboxyl group accounts for 60% to 99% of a total mass of the oxygen element in the hard carbon material.

4. The negative electrode active material according to claim 2 or 3, wherein the hard carbon material further contains element A, the element A comprises at least one of N or S; and based on a mass of the hard carbon material, a mass percentage of the element A ranges from 0.05% to 2%.

5. The negative electrode active material according to any one of claims 1 to 4, wherein the hard carbon material satisfies 0.8 ≤ I_{D}/I_{G} ≤ 1.5, wherein I_{D} represents a peak area of a D peak in a Raman spectrum of the hard carbon material, and I_{G} represents a peak area of a G peak in the Raman spectrum of the hard carbon material.

6. The negative electrode active material according to any one of claims 1 to 5, wherein within a potential range of 0 V to 2.5 V relative to Li/Li⁺, a total lithium storage specific capacity of the hard carbon material ranges from 300 mAh/g to 700 mAh/g; a delithiation energy of the hard carbon material is E₁ Wh, a delithiation capacity of the hard carbon material is C₁ Ah, an average delithiation potential of the hard carbon material is E₁/C₁ V, and 0.13 ≤ E₁/C₁ ≤ 0.28; and
within a potential range of 0 V to 0.1 V relative to Li/Li⁺, a specific capacity of the hard carbon material accounts for 30% to 65% of the total lithium storage specific capacity; and within a potential range of 0 V to 0.8 V relative to Li/Li⁺, the specific capacity of the hard carbon material accounts for 70% to 96% of the total lithium storage specific capacity.

7. The negative electrode active material according to any one of claims 1 to 6, wherein within a potential range of 0 V to 2.5 V relative to Na/Na⁺, a total sodium storage specific capacity of the hard carbon material ranges from 250 mAh/g to 400 mAh/g; a desodiation energy of the hard carbon material is E₂ Wh, a desodiation capacity of the hard carbon material is C₂ Ah, an average desodiation potential of the hard carbon material is E₂/C₂ V, and 0.2 ≤ E₂/C₂ ≤ 0.4; and
within a potential range of 0 V to 0.5 V relative to Na/Na⁺, a specific capacity of the hard carbon material accounts for 76% to 91% of the total sodium storage specific capacity; and within a potential range of 0 V to 0.8 V relative to Na/Na⁺, the specific capacity of the hard carbon material accounts for 89% to 95% of the total sodium storage specific capacity.

8. The negative electrode active material according to any one of claims 1 to 7, wherein an electrical conductivity of the hard carbon material ranges from 0.5 S/cm to 10 S/cm.

9. A preparation method of the negative electrode active material according to any one of claims 1 to 8, wherein the preparation method of the hard carbon material comprises:
(1) crushing and sieving a precursor, placing the precursor in a sealed reactor, and replacing a gas in the sealed reactor with a first gas; wherein the precursor comprises at least one of lignin, cellulose, alkali lignin, asphalt, epoxy resin, or phenolic resin, and the first gas comprises any one of oxygen, air, or carbon dioxide;
(2) sealing the sealed reactor and performing primary calcination on the sealed reactor in a nitrogen atmosphere, heating at a rate of 0.5°C/min to 5°C/min to a temperature of 700°C to 900°C for pre-carbonization for 1 h to 4 h, and cooling to obtain a pre-carbonized material;
(3) performing secondary calcination on the pre-carbonized material in a nitrogen atmosphere, heating at a rate of 0.5°C/min to 5°C/min to a temperature of 1000°C to 1500°C for carbonization for 1 h to 8 h, cooling to obtain a carbonized material, and classifying the carbonized material according to particle size; and
(4) heating the classified material from step (3) to a temperature of 700°C to 1200°C, introducing a mixed gas of a reducing gas and argon, maintaining for 0.1 h to 12 h, then replacing the mixed gas with nitrogen, and cooling to obtain the hard carbon material; wherein the reducing gas comprises at least one of acetylene or methane, and based on a mass of the mixed gas, a mass percentage of the reducing gas ranges from 5 wt% to 20 wt%.

10. A secondary battery, wherein the secondary battery comprises a positive electrode plate, a negative electrode plate, and an electrolyte, wherein the negative electrode plate comprises a negative electrode current collector and a negative electrode active material layer disposed on at least one surface of the negative electrode current collector, and the negative electrode active material layer comprises the negative electrode active material according to any one of claims 1 to 8 or the negative electrode active material prepared by the preparation method according to claim 9.

11. The secondary battery according to claim 10, wherein a compacted density of the negative electrode active material layer ranges from 0.8 g/cm³ to 1.2 g/cm³.

12. An electronic device, wherein the electronic device comprises the secondary battery according to claim 10 or 11.
